(19) Europäisches Patentamt
European Patent Office
Office européen des brevets

(11) **EP 2 614 505 B1**

(12) **EUROPEAN PATENT SPECIFICATION**

(45) Date of publication and mention
of the grant of the patent:
**28.02.2018 Bulletin 2018/09**

(21) Application number: **11839985.6**

(22) Date of filing: **07.11.2011**

(51) Int Cl.:
*G21B 1/19* *(2006.01)*    *G21B 1/03* *(2006.01)*

(86) International application number:
**PCT/US2011/059634**

(87) International publication number:
**WO 2012/064668 (18.05.2012 Gazette 2012/20)**

(54) **INDIRECT DRIVE TARGETS FOR FUSION POWER**

INDIREKTE ANTRIEBSZIELE FÜR EINE FUSIONSLEISTUNG

CIBLES À ATTAQUE INDIRECTE POUR LA PRODUCTION D'ÉNERGIE PAR FUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2011 US 201161425198 P**
**08.11.2010 US 411390 P**

(43) Date of publication of application:
**17.07.2013 Bulletin 2013/29**

(73) Proprietor: **Lawrence Livermore National Security, LLC**
**Livermore, CA 94550 (US)**

(72) Inventors:
• **AMENDT, Peter A.**
**Livermore**
**California 94550 (US)**
• **MILES, Robin R.**
**Livermore**
**California 94550 (US)**

(74) Representative: **Diehl & Partner GbR**
**Patentanwälte**
**Erika-Mann-Strasse 9**
**80636 München (DE)**

(56) References cited:
WO-A2-2009/058185    US-A1- 2008 063 132
US-A1- 2008 256 850    US-A1- 2010 212 133
US-B2- 7 079 001

• **HAAN S W ET AL: "Design and simulations of indirect drive ignition targets for NIF; Design and simulations of indirect drive ignition targets", NUCLEAR FUSION, PUBLISHING SECTION. VIENNA, AT, vol. 44, no. 12, 1 December 2004 (2004-12-01), pages S171-S176, XP020020185, ISSN: 0029-5515, DOI: 10.1088/0029-5515/44/12/S06**
• **VANDENBOOMGAERDE ET AL.: "Prolate-Spheroid ("Rugby-Shaped") Hohlraum for Inertial Confinement Fusion", PHYSICAL REVIEW LETTERS, vol. 99, no. 6, 10 August 2007 (2007-08-10), XP002753631, DOI: http://dx.doi.org/10.1103/PhysRevLett.99.065004**
• **A. Heller: "New targets for inertial fusion", Lawrence Livermore National Laboratory , November 2001 (2001-11), pages 1-3, XP002753576, USA Retrieved from the Internet: URL:https://str.llnl.gov/str/November01/Tabak.html [retrieved on 2016-01-27]**
• **Callahan et al.: "Using Laser Entrance Hole Shields to Increase Coupling Efficiency in Indirect Drive Ignition Targets for the National Ignition Facility (NIF)", Lawrence Livermore National Laboratory , no. UCRL-CONF-216959 3 November 2005 (2005-11-03), pages 1-21, XP002753577, USA Retrieved from the Internet: URL:http://www.osti.gov/scitech/biblio/928165-MVGLky/ [retrieved on 2016-01-27]**

- **LINDL J D ET AL: "THE PHYSICS BASIS FOR IGNITION USING INDIRECT-DRIVE TARGETS ON THE NATIONAL IGNITION FACILITY", PHYSICS OF PLASMAS, AMERICAN INSTITUTE OF PHYSICS, WOODBURY, NY, US, vol. 11, no. 2, 1 February 2004 (2004-02-01), pages 339-491,01, XP009030427, ISSN: 1070-664X, DOI: 10.1063/1.1578638**

## Description

### Statement as to Rights to Inventions Made Under Federally Sponsored Research or Development

The United States Government has rights in this invention pursuant to Contract No. DE-AC52-07NA27344 between the United States Department of Energy and Lawrence Livermore National Security, LLC.

### Reference to Related Applications

This United States Patent Application is related to, and claims priority from, two earlier filed United States Provisional Patent Applications entitled "Inertial Confinement Fusion Power Plant which Decouples Life-Limited Components from Plant Availability," filed November 8, 2010, as serial number 61/411,390 and from a provisional application having the same title and filed February 1, 2011, as serial number 61/425,198.

### Background of the Invention

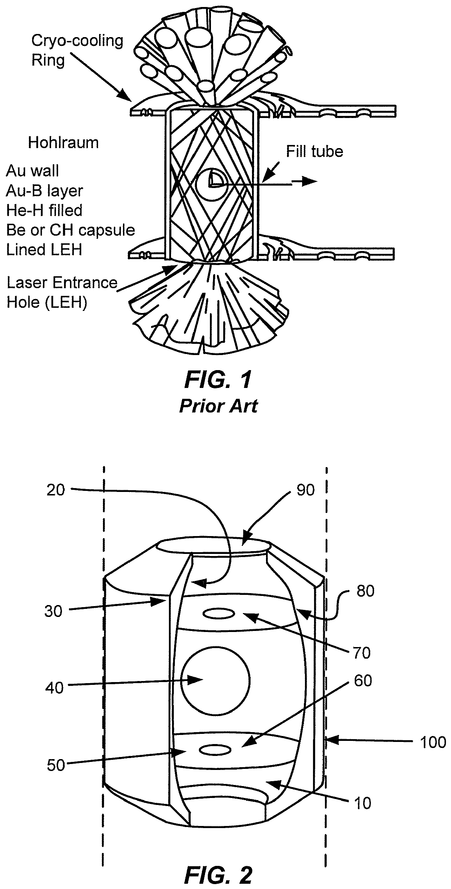

This invention relates to targets for fusion reactions, and in particular to targets for fusion-based power plants.
The National Ignition Facility (NIF) is laser-based inertial confinement fusion research machine at the Lawrence Livermore National Laboratory in Livermore, California. NIF uses lasers to heat and compress a capsule of deuterium and tritium fuel contained within a hohlraum to the temperatures and pressures to cause a nuclear fusion reaction. The laser beams do not strike the capsule directly; rather, they are focused onto the interior surface of the hohlraum, a technique known as indirect drive. A goal of NIF is to reach "ignition," a condition that produces more energy than used to start the reaction.
The NIF hohlraum is a generally cylindrical cavity whose walls emit radiant energy towards the interior. In the indirect drive approach to inertial confinement fusion, the fusion fuel capsule is held inside a cylindrical hohlraum and the laser beams enter through laser entrance holes at the ends of the cylinder, striking the interior surface of the hohlraum. The hohlraum absorbs and re-radiates the energy as x-rays onto the capsule. The goal of this approach is to have the energy re-radiated in a more symmetric manner than would be possible in the direct drive approach in which the laser beams strike the fuel capsule directly, i.e., without an intervening hohlraum.
A typical prior art hohlraum and capsule, as used at NIF, is shown in Figure 1.
The article "Prolate-Spheroid ("Rugby-Shaped") Hohlraum for Inertial Confinement Fusion" by Vandenboomgarde et al. in Physical Review Letters 99(6) discloses a hohlraum in which the walls are bent towards the center of the hohlraum to control the radiation asymmetry of the capsule. The gas filling is a mixture of He and hydrogen, enclosed by polyimide windows.
The article "Design and simulations of indirect drive ignition targets for NIF" by S.W. Haan et al. in Nucl. Fusion 44 discloses a hohlraum made of gold and containing a central spherical capsule. The hohlraum is filled with He, or He and hydrogen.

### Brief Summary of the Invention

For inertial confinement fusion to become the reliable clean source of electrical energy that is needed throughout the world, it is estimated that a megawatt size power plant will require on the order of 10 to 15 targets per second. The targets are injected into a fusion engine chamber and fired upon by a bank of lasers. The NIF system presently uses 192 lasers to focus energy on the interior surfaces of the hohlraum within its target chamber.
For development of cost effective fusion power, inertial confinement fusion target designers must consider many engineering requirements in addition to the physics requirements for a successful target implosion. These considerations include low target cost, high manufacturing throughput, the ability of the target to survive the injection into the fusion chamber and arrive in a condition and physical position consistent with proper laser-target interaction, and the ease of post-implosion debris removal. In addition, these requirements include the ability to handle the acceleration forces of injection into the fusion chamber, the ability to maintain a cold DT near its triple-point temperature during flight through the hot fusion chamber, yet provide a highly efficient uniform illumination of the capsule containing the fusion fuel.
In a preferred embodiment we provide a hohlraum for an indirect drive inertial confinement fusion power plant in which the hohlraum surrounds a capsule at a central location containing fusion fuel. The hohlraum has an exterior surface with two end regions and a mid-region between the two end regions. The mid region has a generally symmetrical cylindrical configuration of first diameter about a central axis, while each of the end regions taper from the first diameter to a second smaller diameter at the ends of the hohlraum. Each of the end regions of the hohlraum has a laser beam entrance hole and a covering to enclose a gas within the hohlraum. The interior of the hohlraum is gas filled and defined by an interior wall having an oval shape with respect to the center axis.

**Brief Description Of The Drawings**

Figure 1 illustrates a prior art hohlraum and capsule such as used by NIF;

Figure 2 is a perspective view of a preferred embodiment of the hohlraum and capsule;

Figure 3 is a diagram illustrating a temperature profile;

Figure 4 is a graph illustrating the change in temperature with time for the hohlraum;

Figure 5 is a perspective view illustrating another embodiment of the target;

Figure 6 is a diagram illustrating costs associated with various materials;

Figure 7 is a graph showing the relationship among target injection rate, target cost and the relative cost of electricity; and

Figure 8 is a diagram illustrating a manufacturing process for manufacture of the hohlraum and capsule.

**Detailed Description of the Invention**

We have designed a target to satisfy these demands for a laser based inertial confinement fusion power plant, often referred to here as the Laser Inertial Fusion-based Energy (LIFE) power plant, currently under development. This planned power plant uses multiple laser-beam drivers for ignition. Parameters of the system relevant to the LIFE target design are listed in Table 1 below:

Table 1. Planned Target Requirements

| Parameter | Value |
| --- | --- |
| Per-target cost | < 30 cents |
| Repetition rate | 10-20 Hz. |
| Injection acceleration rate | $\sim$6000 m/s$^2$ |
| Injection exit velocity | $\sim$250 m/s |
| Chamber gas temperature | 6000 - 8000K |
| Chamber gas pressure | $\sim$23 Torr |
| Chamber wall temperature | $\sim$900K |
| Chamber radius | $\sim$6 m |
| Maximum DT temperature change | $\sim$100mK |

Figure 2 is an illustration of a preferred embodiment of the target of this invention that satisfies the criteria of Table 1. The capsule 40 containing the fusion fuel is about a 4 mm diameter hollow spherical capsule 40 made of high density carbon. In a preferred embodiment, the capsule has a chemical vapor deposition deposited diamond ablator wall, with a thickness less than about 100 $\mu$m. A nanoporous foam, e.g. CH1.2, lines the interior wall of the capsule. The inner deuterium-tritium (DT) fuel layer is about 150 $\mu$m thick. When in use the capsule and hohlraum are cooled to a low temperature on the order of less than 20K.

The hohlraum 100 is made generally of lead, about 1 cm in diameter by about 2 cm long, with an insulating wall 30. An approximately 20$\mu$m thick layer of high-Z material 20, e.g., plated lead, on the inside hohlraum wall provides for more efficient x-ray production. The hohlraum has a rugby ball-shaped interior 80 for better coupling of the expected approximately 2.2 megajoule (MJ) laser energy to the capsule 40. The shape of the interior surface is a circular arc with origin vertically offset to satisfy the prescribed dimensions of the hohlraum, e.g., maximum and minimum inner radii, and length.

Infrared reflectors 50, typically a low-Z membrane material such as carbon or polyimide coated with a thin reflective metal layer such as 30 nm thick aluminum, help protect the capsule from radiant heat in the fusion chamber. "P2" shields 60 and 70, typically manufactured from the same material as the hohlraum, and deposited onto the polyimide membrane, provide symmetry and enhancement of the x-ray bath around the capsule 40. An additional low-Z membrane is used to support the capsule 40 within the hohlraum 100. The hohlraum is filled with helium gas which tamps the degree of the hohlraum wall expansion to provide greater symmetry control. The gas is sealed in by the windows 90 over the laser entrance holes at opposite ends of the hohlraum. The exterior surface of the hohlraum 100 has cylindrical sides to enable guidance by a target injector used to introduces the targets into the fusion chamber.

Thermal Considerations

A low pressure (about 23 Torr) xenon atmosphere is used in the fusion chamber to protect the first wall of the fusion chamber from the assault of ions and much of the prompt x-ray radiation produced during thermonuclear detonation. While this permits the use of more conventional materials for the first wall, it increases the difficulty of maintaining the DT layer temperature at about 19°K during flight of the target though this atmosphere, which remains at temperatures of about 8000°K. The hohlraum substrate 30 insulates the capsule 40 from the hot xenon gas during the approximately 24 ms flight time to the chamber center.

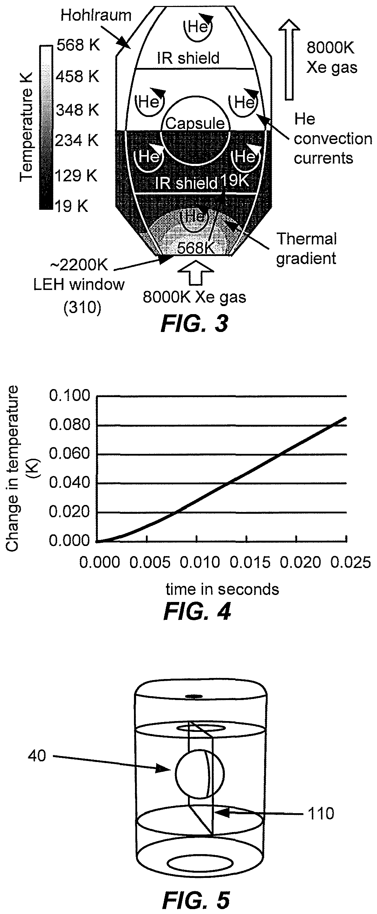

The approximately 500 nm thick graphene or graphene-composite windows 90 over the laser entrance holes (LEH) heat rapidly in the 8000°K Xe atmosphere to about 2200°K, but remain below the temperature limit of graphene (about 3000°K). The helium atmosphere fill (about 1 mg/cc) in the hohlraum transports heats to the hohlraum which acts as the thermal heat sink. This is illustrated by Figure 3 which provides a calculated temperature distribution for the target as it passes through the fusion chamber. As shown in Figure 3 the infrared radiation from the 900°K chamber walls reflects off the IR shields 60, 70 inside the hohlraum. These IR shields comprise a thin polyimide membrane about 400 nm in thickness coated with about 30 nm of metalized aluminum. The infrared shields heat the helium near the capsule 40. The DT temperature is expected to rise about 80mK which is below our goal of a100 mK maximum change in temperature. Figure 4 is a graph illustrating the expected fuel temperature rise as a function of flight time in the chamber.

Structural Considerations

The hohlraum is made sufficiently robust to the ~ 600g acceleration forces of injection by the choice of materials and wall thickness. The more fragile components of the target are the DT layer within the capsule and then ~ 110 nm thick carbon-based capsule support membrane. Hydrogen isotopes have high affinity to other materials. If the DT layer adheres to the ablator as expected, then the ablator provides structural support for the DT layer. Our analysis indicates that a chemical vapor deposition deposited diamond ablator layer coupled with a layer of deuterium will result in deformation of the capsule of <1 $\mu$m out-of-round. This is within our expected tolerances. Analysis to date of the capsule support membrane using membrane data taken for NIF targets and applied to membrane deflection equations suggest that the membrane will remain intact up to acceleration rates of 600g provided that the membrane is molded to conform to the shape of the capsule with a minimum amount of initial pre-stress such that the acceleration forces are the dominant forces affecting membrane deflection.

Another approach to reduce membrane forces and deflections is to orient the capsule support membranes in the direction of the acceleration force. This is illustrated in Figure 5 for a cylindrical hohlraum, but the approach can be used for other hohlraum configurations, e.g., as depicted in Figure 2. The membrane is anchored to the hohlraum structure partition line which is also oriented axially. In this case it is expected that the tolerable acceleration rate will exceed 1000g. We expect that measurement of the material properties for candidate materials at cryogenic conditions, coupled with finite element analyses of the thin membranes, will confirm that the support membrane will survive both the static and dynamic forces of injection acceleration.

Material Considerations

Removal of the debris from the chamber following the implosion and subsequent recycling and/or disposal also imposes design constraints for target material selection. This is especially true for the hohlraum material which constitutes the majority of the mass of the target. As described above, the hohlraum consists of an inner high-Z layer and a thermally insulating-structural support material. In some implementations it will also include a conductive outer layer if an induction injector or an electromagnetic trajectory steering section is used for injection.

It is desirable for the hohlraum materials to have a melting temperature lower that the wall temperature of 900K so that solid deposits will not accumulate on the fusion chamber wall. Such deposits could alter the thermal or neutronic characteristics of the wall, or they might create a cloud of solid debris near the wall which could reduce the laser propagation through the chamber, or even effect target flight into the chamber. Materials with a high vapor pressure can be continuously pumped out of the chamber for easy removal.

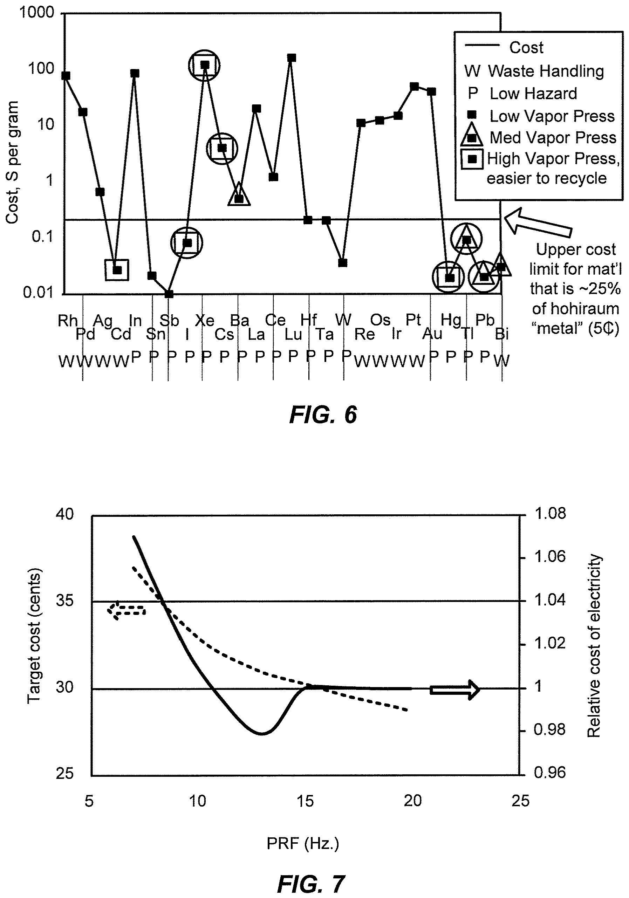

With regard to laser propagation through the residual vapor, absorption lines near the laser frequency which result in Stokes-shifted Raman scattering are being analyzed to determine if this effect will significantly affect the amount of laser light reaching subsequent targets. Lead is an attractive high-Z hohlraum material because it is inexpensive, has low-level activation products and is easily manufactured through swaging or plating. Less expensive materials with low-radiation activation levels such as lead could be discarded as low-level waste or recycled if the recycling costs are low. Materials that may present a waste-disposal challenge because of activation are avoided. Cost, vapor-pressure based debris removal and waste disposal selection criteria for the high-Z layer of the hohlraum are summarized in Figure 6.

Manufacturing Considerations

Manufacturing cost is a consideration for both the choice of target material and the specific target geometry. Ideally, the selected material preferably is a small fraction of the overall target cost. The bulk of the target costs results from mechanical and chemical processing operations. Lower production costs result from conventional high-throughput manufacturing techniques such as die-casting or stamping for the mechanical processes, and from increasing the batch size of chemical processes, e.g., chemical vapor deposition and electroplating. Our preliminary cost analysis suggests that the per-target cost can be less than 30 cents. Preliminary cost analysis is illustrated in Figure 7 which also illustrates the impact of target costs, repetition rate and relative cost of electricity.

We estimate that material costs for lead hohlraums and a CVD diamond capsule ablator costs are a relatively small part of the target costs ($\sim$17%) while the equipment costs are a relatively large fraction ($\sim$42%) of the overall target cost. This is a result of the large number of plasma CVD coating machines required to produce the $\sim$1.3 million capsules per day even with the large batch size ($\sim$45,000 per batch) that is postulated.

Injection-Tracking Considerations

Another design consideration of the target is to incorporate features necessary for tracking the target trajectory through the chamber such that it will connect with the laser-driven beams to within about 100 $\mu$m of the designed engagement point. The distance between the muzzle end of the injector and the chamber center is set by the maximum neutron flux that can be tolerated by the DT layer. The temperature of the DT layer can be unacceptably increased by interaction with the neutrons or by any component parts of the injector system which may experience unacceptable neutron damage. A shuttered neutron shield system located between the injector and the chamber reduces the neutron and gamma radiation to the target. For a description of the particular injector mechanism and target tracking system, see the commonly assigned, co-pending Application entitled "Fusion Target Injection and Tracking" with the application number PCT/US2011/059791.

The shorter the distance between the injector muzzle and the chamber center, the more accurately the target can be placed in fusion chamber center. Injection accuracy depends on the dimensional quality of the injector and the mitigation of vibration. Our objective is to place the targets within a $\pm$500 $\mu$m lateral dimension perpendicular to the target trajectory at chamber center which is equal to the expected range of motion of the laser pointing system for final optics placed 20 meters from the fusion chamber center. The tracking system measures the position and velocity of the target as it traverses the chamber. The system consists of a set of crossing laser beams triggered by the external shape of the target. It is expected that the target can be tracked to within about $\pm$ 50 $\mu$m with reference to the chamber center. When the target is within about 25 $\mu$s of the chamber center ($\sim$6 mm for a 250 m/s target velocity), the engagement sensors, which use the same optics as the laser, measure the position of the target relative to the pointing direction of the laser to within an expected accuracy of $\pm$10 $\mu$m and correct the laser pointing direction to impact the target to within the $\pm$100 $\mu$m. Changes in velocity or expected position of the target as determined by the tracking system are corrected by the engagement sensors. The engagement system relies on the front and aft faces of the target reflecting laser light in a defined pattern, e.g., a ring pattern or other fiducial. This allows the engagement sensors to accurately predict the position of the target.

Physics of the Target

The physics design of the target is discussed in detail in the attached Appendix A, "Life Pure Fusion Target Designs: Status And Prospects," by Amendt, Dunne, Ho and Lindl, incorporated by reference herein.

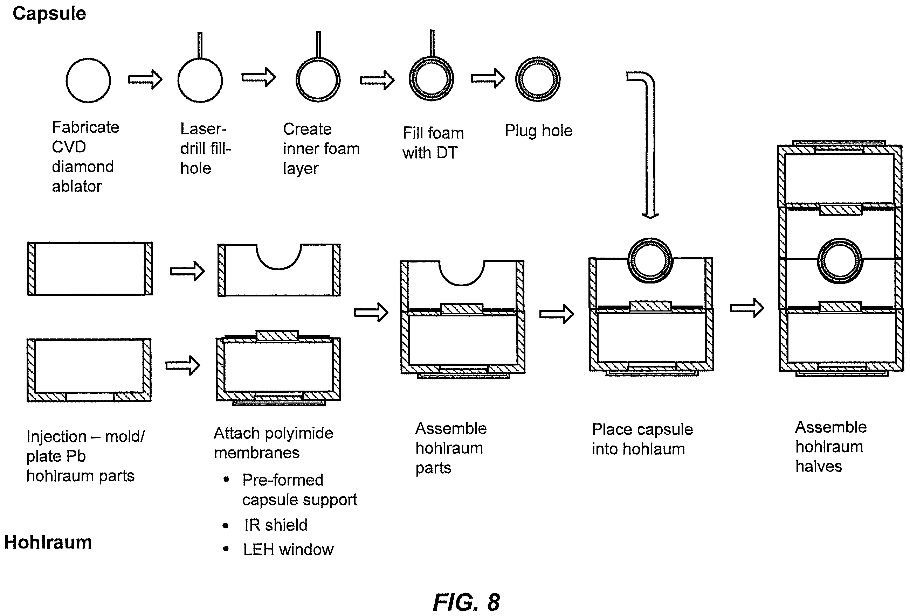

Figure 8 is a schematic diagram illustrating a manufacturing process for manufacture of the capsule and hohlraum as described above. The capsule fabrication begins with fabrication of a diamond ablator shell for containment of the DT fuel. This process is carried out by chemical vapor deposition on a spherical shell. A fill hole is informed in the capsule to enable the introduction of a nanofoam consisting of CH1.2 a carbon-based polymeric material. The DT fuel is then introduced into the capsule and absorbed into the foam. The nature of the process is carried out at about 300K, resulting in the foam and DT fill being self-leveling upon cooling to about 15-20K in a later part of the process, i.e.,

forming a uniformly thick layer around the inside of the capsule wall. Once the DT-vapor-phase fill process is complete the hole in the capsule wall is plugged, e.g., by polymers and high density carbon. The formation of the foam layer consists of introducing an aliquot of foam into the shell, forming a layer of solgel on the inside surface of the capsule through spin-coating or dielectrophoresis or other method during the polymerization process, then extraction of the solvent matrix.

The bottom portion of Figure 8 illustrates the hohlraum manufacturing process. Using injection molding and plating operations the bulk hohlraum parts are prepared. (Note that the process is illustrated schematically for a cylindrical hohlraum, as opposed to the hohlraum depicted in Figure 2, which would be manufactured using the same process.) The hohlraum could be die-cast, molded or swaged using lead or other high-Z materials. At the second step in the process the infrared shields and laser entrance hole windows are affixed to the hohlraum components, with the support membrane having a preformed depression to support the capsule.

Next as shown in the third manufacturing step of the process, the hohlraum parts are assembled together. The capsule is then provided and placed into the preformed capsule support membrane. Then, as shown in the last step of the process, the other half of the hohlraum, manufactured using the same process steps in the same order as provided, and the 2 halves are joined together.

The preceding is a description of a preferred embodiment of indirect drive targets for use in a fusion power plant. It is important to note that numerous modifications can be made to the design of the target without departing from the scope of the invention as claimed below. For example, other materials may be substituted for the windows covering the laser entrance holes, the material of the hohlraum itself, its shape, and its components.

The invention is in any case defined by the appended claims. Analysis and radiation-hydrodynamics simulations for expected high-gain fusion target performance on a demonstration 1 GWe Laser Inertial Fusion Energy (LIFE.2) power plant in the mid-2030s timeframe are presented. The required laser energy driver is 2.41 MJ at a 0.351 $\mu$m wavelength, and a fusion target gain greater than 64 at a repetition rate of 15 Hz is the design goal for economic and commercial attractiveness. A scaling-law analysis is developed to benchmark the design parameter space for hohlraum-driven central hot-spot ignition. A suite of integrated hohlraum simulations is presented to test the modeling assumptions and provide a basis for near-term experimental resolution of the key physics uncertainties on the National Ignition Facility.

## 1. INTRODUCTION

The National Ignition Facility (NIF) is poised to demonstrate ignition by 2012 based on the central hot-spot (CHS) mode of ignition and propagating thermonuclear burn [1]. This immediate prospect underscores the imperative and timeliness of advancing inertial fusion as a carbon-free, virtually limitless source of energy by the mid-21$^{st}$ century to substantially offset fossil fuel technologies. To this end, an intensive effort is underway to leverage success at the NIF and to provide the foundations for a prototype "LIFE.1" engineering test facility by ~2025, followed by a commercially viable "LIFE.2" demonstration power plant operating at 1 GWe by ~2035. The current design goal for LIFE.2 is to accommodate ~2.41 MJ of laser energy (entering the high-Z radiation enclosure or "hohlraum") at a 0.351 $\mu$m wavelength operating at a repetition rate of 15 Hz, and to provide a fusion target yield of 147 MJ.

To achieve this design goal first requires a "0-d" analytic gain model that allows convenient exploration of parameter space and target optimization. This step is then followed by 2- and 3-dimensional radiation-hydrodynamics simulations that incorporate laser beam transport, x-ray radiation transport, atomic physics, and thermonuclear burn [2]. These simulations form the basis for assessing the susceptibility to hydrodynamic instability growth, target performance margins, laser backscatter induced by plasma fluctuations within the hohlraum, and the threat spectrum emerging from the igniting capsule, e.g., spectra, fluences and anisotropy of the x rays and ions, for input into the chamber survivability calculations. The simulations follow the guidelines of a "point design" methodology, which formally designates a well-defined milestone in concept development that meets established criteria for experimental testing.

In this paper we present in Sec. II the 0-d analytic gain model to survey gain versus laser energy parameter space. Section III looks at the status of integrated hohlraum simulations and the needed improvements in laser-hohlraum coupling efficiency to meet the LIFE.2 threshold target gain of ~64. Section IV considers advanced hohlraum designs to well exceed the LIFE.2 design goal for satisfactory performance margins. We summarize in Sec. V.

## II. ANALYTIC SCALING LAWS

Here, we develop some analytical scaling relations to help provide target-design guidance for candidate CHS LIFE.2 targets. The canonical laser energy for the $3\omega$ 300 eV National Ignition Campaign (NIC) CH ablator point design is 1.2 MJ, delivered over a duration of $\approx$19 ns. The capsule absorbs 186 kJ and produces 15.9 MJ of yield. The hohlraum case-to-capsule radii ratio (CCR), defined as $\sqrt{A_w / A_{cap}}$ where $A_w$ is the hohlraum wall area and $A_{cap}$ the capsule area, is 2.76, the laser-entrance-hole (LEH) fraction is 57% (by radius) and the capsule radius is 1108 $\mu$m. From energy

conservation we write:

$$\eta P_L = \sigma_B T_R^4 \left[ \left(1-\alpha_w\right) A_W + 2 A_{LEH} + \left(1-\alpha_{cap}\right) A_{cap} \right], \qquad (1)$$

where $\eta$ is the hohlraum conversion efficiency (from laser energy to x rays), $P_L$ is the (peak) laser power, $T_R$ is the hohlraum (peak) radiation temperature, $\alpha_w$ is the hohlraum wall x-ray albedo, $A_{LEH}$ is the area of one of the two LEHs, and $\alpha_{cap}$ is the capsule x-ray albedo. Using the similarity solutions from a Marshak wave analysis, one obtains $1-\langle\alpha_w\rangle = 0.52 T_R^{-0.7}\tau^{-0.38}$ where $\tau$ is the duration of the (flattop equivalent) peak power portion of the laser drive pulse, and angular brackets denote a time average over $\tau$ [1]. We rewrite Eq. (1) as:

$$P_L = \frac{\sigma_B T_R^4 \, 4\pi R_{cap}^2 CCR^2}{0.7\tau^{0.13}} \left[ 0.52 T_R^{-0.7}\tau^{-0.38} + \frac{f_{LEH}^2}{1-f_{LEH}^2 + \dfrac{2z_H}{R_H}} + \frac{\left(1-\alpha_{cap}\right)}{CCR^2} \right], \qquad (2)$$

where $f_{LEH}$ is the LEH fraction (by radius), $R_H$ is the (cylindrical) hohlraum radius, $2z_H$ is the hohlraum length and $R_{cap}$ is the initial capsule radius. Further progress is made by introducing the peak implosion speed: $v_{imp}[\mu\mathrm{m/ns}] = 5.085\gamma\beta^{3/5}T_R^{0.9}$ [heV] [2], where $\beta$ is the ratio of the pressure at a given density to the Fermi pressure, $\gamma = R_{cap}/\Delta$ is the shell in-flight aspect ratio ($\cong 30$), and the radiation temperature is written in units of 100 eV, i.e., heV. Whence,

$$R_{cap}[cm] = \frac{\beta^{1/5}\gamma^{1/3}}{6.325 T_R^{1.03}[heV]} E^{1/3}[MJ], \qquad (3a)$$

$$\tau[ns] = \frac{399 E_{cap}^{1/3}[MJ]}{T_R^{1.93}[heV]\beta^{2/5}\gamma^{2/3}}, \qquad (3b)$$

where $E_{cap} = 4\pi R_{cap}^2 \sigma_B T_R^4 \tau$ is the absorbed capsule energy. Using Eqs. (3a-b) in Eq. (2) and defining $E_{laser} \cong P_L\tau$, we obtain:

$$E_{laser}[MJ] = 0.842 \cdot T_R^{0.25}[heV] \cdot \beta^{0.052}\gamma^{0.0867} E_{cap}^{0.956}[MJ] \cdot CCR^2 \times$$

$$\left[ 0.0544 T_R^{0.0345}[heV] \cdot E_{cap}^{-0.127}[MJ] \cdot \gamma^{0.253}\beta^{0.152} + \frac{f_{LEH}^2}{1-f_{LEH}^2 + \dfrac{2z_H}{R_H}} + \frac{\left(1-\alpha_{cap}\right)}{CCR^2} \right]$$

$$(4)$$

Note that $E_{laser}$ scales almost linearly with $E_{cap}$, but the dependence on $T_R$ is fairly weak. The capsule absorbed energy scales with thermonuclear yield Y as

$$E_{cap}[MJ] = 0.0285 \cdot Y^{3/5}[MJ], \qquad (5)$$

based on radiations-hydrodynamics simulations [2]. The amount of fuel mass $m_f$ at the instant of peak implosion velocity scales as $E_{cap}/v_{imp}^2$, assuming most of the remaining shell mass is in fuel. Thus, more thermonuclear yield is possible for lower implosion speeds at fixed $E_{cap}$, subject to the constraint of a preserved performance margin $M \propto R_{cap}^3 v_{imp}^{7.7} \cong E_{cap} v_{imp}^{8.7}$ [3]. At fixed margin the amount of available fuel mass now scales more favorably: $m_f \propto E_{cap}^{10/8.7}$, which in turn gives in place of Eq. (5), after ignoring the slight increase in burn fraction with $E_{cap}$:

$$E_{cap} \propto Y^{0.488}. \qquad (6)$$

The minimum radiation temperature required for ignition with margin M at a given $E_{cap}$ scales as:

$$T_R[heV] = 66.2 E_{cap}^{-1/5.31}[MJ] \cdot M^{-1/5.31} \gamma^{-1.11}, \qquad (7)$$

where the factor of 5.31 in the exponents arises from the scaling of Herrmann *et al.* [4] for the threshold ignition (absorbed capsule) energy with implosion velocity $(v_{imp}^{-5.9})$. Using Eqs. (6,7) to eliminate $E_{cap}$ and $T_R$ in Eq. (2) gives $E_{laser}$ as a function of $Y$ which we further study. The low energy endpoint is normalized to the NIC CH point design whose properties have been summarized above. An improvement in hohlraum efficiency at lower drive temperatures has been predicted by Suter *et al.* [5] based on 1-d hohlraum simulation studies, and is conveniently parameterized as follows:

$$E_{laser} \rightarrow E_{laser} \cdot \left\{ \frac{0.315 - 0.162 \cdot \left(T_R[heV]/3\right)^4}{0.315 - 0.162} \right\}. \qquad (8)$$

Figure 1 shows the expected target gain $G = Y/E_{laser}$ versus $Y$ and $E_{laser}$ under two scenarios: (1) added fuel-mass scaling at fixed margin [Eq. (6)], higher hohlraum efficiency at lower $T_R$ [Eq. (8)] (upper curve); and (2) added fuel-mass scaling, but using the nominal hohlraum efficiency (lower curve). The area between the two curves reflects the uncertainty in overall hohlraum efficiency with the lower curve representing a conservative bound.

III. NIC-LIKE HOHLRAUM SIMULATIONS

Figure 1 provides a first estimate on the target gains accessible for a given laser energy, subject to assumptions on the laser-to-hohlraum coupling efficiency. The next step is to perform integrated hohlraum simulations that incorporate the physical processes of laser energy propagation and absorption, conversion of laser energy to xrays, radiation transport,

**Fig. 1:** Gain versus yield scaling for several values of laser energy (dotted lines). Top (lower) blue curve is with (without) improved hohlraum efficiency prediction (Suter *et al* [5]). Red filled circle denotes $E_{cap}$=3.47 MJ integrated (cylindrical) hohlraum symmetry tune with NIC-like beam geometry; green filled circle is LIFE.2 design point $E_{laser}$=2.41 MJ, $Y$=147 MJ); green open circle is symmetrized, 2-d integrated hohlraum calculation.

atomic physics, thermal transport and thermonuclear burn. The key element introduced by integrated, 2-d hohlraum simulations is the requirement for a quasi-symmetric capsule implosion. To this end, the hohlraum length is adjusted to provide *time-integrated* x-ray flux symmetry near hohlraum target center, and the relative laser power between the inner (23, 30° relative to the hohlraum symmetry axis) and outer (44, 50°) laser cones are temporally adjusted to provide sufficient *time-dependent* drive symmetry as well [6]. Figure 1 shows the result of a hohlraum tune in a NIC-like laser and target geometry extrapolated to an earlier first-generation LIFE tune that results in a nearly symmetric capsule implosion. The capsule used in the simulation is a high-density carbon ablator that absorbs ~770 kJ of x rays, is driven at ~250 eV peak hohlraum temperature, is designed to have similar performance margin as the NIC CH capsule tune, and has a fuel burn-up fraction of nearly 30%. The HDC ablator has the added advantages of high material strength for survival against target injection stresses and subsequent threats from the harsh target chamber environment. The LEH fraction is 50% (by radius) [See Fig. 2] instead of the 57% LEH fraction adopted for the NIC point design. The required laser energy and resulting target gain is only marginally attractive as a LIFE fusion engine, and recent work has focused on the more economically viable LIFE.2 point design [7]. Figure 1 shows that this design point lies directly on the upper (high efficiency) curve for hohlraum coupling, but requires only a modest improvement in

**Fig. 2:** Schematic of NIC-like hohlraum symmetry tune requiring 3.45 MJ of 3ω laser energy and giving a gain ~67; LEH fraction is 50%.

coupling efficiency of ~11% over the earlier NIC-like tune. Figure 1 shows the status of a numerically symmetrized (in x-ray flux) hohlraum tune that is close in performance to the LIFE.2 design goal. These simulations use a NIC-like hohlraum made of Au/U for maximizing the degree of coupling efficiency to the capsule. A LIFE.2 hohlraum will require far more plentiful materials for cost competitiveness [8], such as Pb. Simulations directly comparing the efficiency between a NIC-like hohlraum and a LIFE.2 hohlraum based on pure Pb show a nearly 15% deficit in coupling x-ray energy to the capsule, requiring in turn 15% more laser energy. Methods to offset this deficit with the cost-effective use of hohlraum wall alloys are under active consideration, as are changes to the hohlraum geometry to improve efficiency as described below.

## IV. ADVANCED HOHLRAUM CONCEPTS

For CHS ignition, the NIC-like hohlraum geometry is currently deemed too marginal to pursue further as an economically defensible candidate for LIFE.2. Target design improvements and forthcoming experimental results on the NIF may favorably alter this status, but a dedicated effort to significantly increase the hohlraum coupling efficiency by a number of methods is a prudent course in the interim.

To overcome the expected drive deficit with Pb hohlraums and to provide sufficient performance margin to plasma-initiated laser backscatter, target fabrication and laser engagement errors, and expected yield degradation from hydrodynamic (interface) instabilities, geometry improvements to the NIC-like hohlraum configuration are sought. Three types of advances in hohlraum design are envisioned: (1) rugby-shaped hohlraums for reduced wall energy losses, (2) high-Z, axial shields on the hohlraum symmetry axis to block the capsule view of the (lossy) LEHs, and (3) a reduced CCR for higher $E_{cap}$. The use of rugby-shaped hohlraums reduces the hohlraum wall surface area by nearly 30% for the case of 50% LEHs, translating into a potential 15-20% savings in required laser energy. The rugby concept enjoys confirming experimental evidence to date, where a ~20% improvement in flux on capsule for the case of vacuum hohlraums was recently demonstrated [9]. Axial shields increase the flux on the capsule by 10-15%, according to radiation-hydrodynamics simulations. The effects of axial discs on symmetry and drive in vacuum hohlraums were validated by experiments on the Nova laser [10]. A 5% larger capsule relative to the hohlraum radius can provide another ~15% in $E_{cap}$, provided flux symmetry control is not adversely affected. These three improvements together could ideally total 40-55%, easily overcoming the deficit from the use of Pb hohlraums, and providing needed performance margin for LIFE.2. However, testing of these design elements, both individually and collectively, on the NIF over the near term will help define the physical limits of their integrated use for LIFE.2. The immediate design goal is to plan for degradations in gain of 20-30%, requiring simulated gains exceeding 80. Ultimately, testing of LIFE-relevant hohlraums on the NIF over the next several years will refine the allowable performance margins for LIFE.2 and tightly constrain the requirements for target fabrication and robustness to injection stresses and laser engagement errors.

## V. SUMMARY

The availability of the NIF for near-term ignition experiments provides a critical and timely rationale for a serious pursuit of inertial-fusion-energy commercial strategies such as LIFE.2. Many of the outstanding physics challenges and questions are amenable to direct testing on the NIF, forestalling the need for intermediate and transitional test

**Fig. 2:** Rugby-shaped hohlraum version of NIC-like LIFE point design, cf., Fig. 1. Required laser energy is <3.2 MJ and target gain is ~77.

facilities. In particular, the fusion engine proposed for a LIFE.2 power plant in many respects can be largely vetted on the NIF for specifying performance margins and target manufacturing tolerances.

The general guidelines for the fusion engine driver underlying a cost-effective LIFE.2 power plant design have been introduced. A minimum target gain of ~64 at an input laser energy driver of 2.41 MJ (delivered to the hohlraum) is the working assumption. Advanced hohlraum concepts using rugby shapes, axial discs and a reduced CCR could well exceed this goal, allowing for significant margin to performance degrading target imperfections, laser backscatter and non-ideal target engagement by the lasers. More study is planned to optimally balance the requirements for high-gain (static) target performance with robustness to chamber insults incurred by a transiting fusion target.

## VI. ACKNOWLEDGMENTS

This work performed under the auspices of the U.S. Department of Energy by Lawrence Livermore National Laboratory under Contract DE-AC52-07NA27344.

## VII. REFERENCES

[1] J.D. Lindl et al., Phys. Plasmas 11 (2), 339 (2004).

[2] J.D. Lindl, Inertial Confinement Fusion (Springer-Verlag, NY, 1998).

[3] D.S. Clark, S.W. Haan and J.D. Salmonson Phys. Plasmas 15, 056305 (2008).

[4] M.C. Herrmann, M. Tabak and J.D. Lindl, Nucl. Fusion 41 99 (2001).

[5] L.J. Suter, S. Haan and M. Herrmann, Bull. Am. Phys. Soc. 50(8),187 (2005).

[6] LIFE.1 and LIFE.2 will utilize a simplified cone geometry of two cones of angles per side based on averages over the angles comprising each of the NIF inner and outer cones: 26.9° and 47.25° relative to the target chamber vertical axis.

[7] M. Dunne et al., "Timely delivery of Laser Inertial Fusion Energy (LIFE)", these Proceedings; T. Anklam, A. Simon, W. Meier, and S. Powers, "The Case for Early Commercialization of Fusion Energy", these Proceedings.

[8] R. Miles et al., "Challenges Surrounding the Injection and Arrival of Targets at LIFE Target Chamber Center", these Proceedings.

[9] F. Philippe et al., Phys. Rev. Lett. 104, 035004 (2010); H.F. Robey et al., Phys. Plasmas 17,056313 (2010).

[10] P. Amendt, T.J. Murphy and S.P. Hatchett, Phys. Plasmas 3, 4166 (1996); P. Amendt, S.G. Glendinning, B. Hammel, O.L. Landen and L.J. Suter, Phys. Rev. Lett. 77, 3815 (1996); D.A. Callahan, P. Amendt, E.L. Dewald, et al., Phys. Plasmas 13,056307 (2006).

**Claims**

1. A hohlraum (100) for an indirect drive inertial confinement fusion power plant in which the hohlraum (100) surrounds a capsule (40) at a central location containing fusion fuel, with the hohlraum (100) comprising:

   an exterior surface having two end regions and a mid-region between the two end regions, the mid region having a generally symmetrical cylindrical configuration of first diameter about a central axis, each of the end regions tapering from the first diameter to a second smaller diameter at ends of the hohlraum (100);
   a laser beam entrance hole at each of the end regions of the hohlraum (100);
   a covering (90) at each of the end regions of the hohlraum (100) to enclose a gas therein; and
   a hollow interior,
   **characterized in that**
   the hollow interior is defined by an interior wall (80) having an oval shape with respect to the central axis; and one of the following applies:

   a) the hohlraum further comprising a lining material disposed on the interior wall (80), wherein the lining material comprises a material of higher density than the interior wall (80); or
   b) the hohlraum (100) further comprising a lining material disposed on the interior wall (80) and two infrared reflectors, one disposed between the covering (90) at one end of the hohlraum (100) and a mid-point along the central axis of the hohlraum (100) and the other disposed between the covering (90) at an opposite end of the hohlraum (100) and the mid-point along the central axis of the hohlraum (100); or
   c) the hohlraum (100) further comprising a membrane disposed perpendicular to the central axis to support the capsule (40) along the central axis near a central point along the central axis.

2. A hohlraum (100) as in claim 1, wherein each of the end regions comprises a truncated cone shaped protrusion extending between the mid-region and the laser beam entrance holes.

3. A hohlraum (100) as in claim 2, wherein the covering (90) over each of the laser entrance holes is substantially transparent.

4. A hohlraum (100) as in claim 2, wherein the hollow interior contains an inert gas confined between the covering (90) at each end of the hohlraum (100).

5. A hohlraum (100) as in claim 4, wherein the inert gas comprises helium.

6. A hohlraum (100) as in option b) of claim 1, further comprising a shield disposed on each of the two infrared reflectors.

7. A hohlraum as in claim 6, wherein each of the shields comprises material which is the same as the lining material.

8. A hohlraum (100) as in claim 6, wherein each of the shields comprises a reflective disk having a center aligned to the central axis of the hohlraum (100).

9. A hohlraum (100) as in option c) of claim 1, wherein the membrane comprises a carbon-based material.

10. A hohlraum (100) as in option a) or b) of claim 1, wherein the lining material comprises a high-Z material such as lead.

**11.** A hohlraum (100) as in claim 1, wherein the covering (90) at each of the end regions comprises a carbon-based material.

**12.** A hohlraum (100) as in claim 9 or 11, wherein the carbon-based material comprises at least one of polyimide, graphene, graphene-reinforced polymer, diamond-like-carbon, or diamond.

**Patentansprüche**

**1.** Hohlkörper (100) für ein Indirect-Drive-Trägheits-Fusionskraftwerk, bei welchem der Hohlkörper (100) eine Kapsel (40) an einer mittigen Stelle umgibt, die Fusions-Brennstoff enthält, wobei der Hohlkörper (100) aufweist:

Eine äußere Oberfläche mit zwei Endbereichen und einem Mittenbereich zwischen den beiden Endbereichen, wobei der Mittenbereich eine allgemein symmetrische zylindrische Konfiguration eines ersten Durchmessers um eine Mittenachse aufweist, wobei sich jeder der Endbereiche von dem ersten Durchmesser auf einen zweiten, kleineren Durchmesser an Enden des Hohlkörpers (100) verjüngt;
ein Laserstrahl-Eintrittsloch an jedem der Endbereiche des Hohlkörpers (100);
eine Abdeckung (90) an jedem der Endbereiche des Hohlkörpers (100) zum Einschließen eines Gases darin; und
ein hohles Inneres,
**dadurch gekennzeichnet, dass**
das hohle Innere begrenzt ist durch eine Innenwand (80) mit ovaler Gestalt in Bezug auf die Mittenachse; und eines der folgenden zutrifft:

a) der Hohlkörper weist ferner ein Auskleidungsmaterial auf, das an der Innenwand (80) angeordnet ist, wobei das Auskleidungsmaterial ein Material höherer Dichte aufweist als die Innenwand (80); oder
b) der Hohlkörper (100) weist ferner ein Auskleidungsmaterial, das an der Innenwand (80) angeordnet ist, und zwei Infrarot-Reflektoren auf, von denen einer zwischen der Abdeckung (90) an einem Ende des Hohlkörpers (100) und einem Mittenpunkt entlang der Mittenachse des Hohlkörpers (100), und der andere zwischen der Abdeckung (90) am gegenüberliegenden Ende des Hohlkörpers (100) und dem Mittenpunkt entlang der Mittenachse des Hohlkörpers (100) angeordnet ist; oder
c) der Hohlkörper (100) ferner eine Membran aufweist, die senkrecht zur Mittenachse angeordnet ist, um die Kapsel (40) entlang der Mittenachse nahe einem Mittenpunkt entlang der Mittenachse zu haltern.

**2.** Hohlkörper (100) nach Anspruch 1, wobei jeder der Endbereiche eine Hervorstehung in Kegelstumpf-Form aufweist, die sich zwischen dem Mittenbereich und den Laserstrahl-Eintrittslöchern erstreckt.

**3.** Hohlkörper (100) nach Anspruch 2, wobei die Abdeckung (90) über jedem der Laserstrahl-Eintrittslöcher im Wesentlichen transparent ist.

**4.** Hohlkörper (100) nach Anspruch 2, wobei das hohle Innere ein Inertgas enthält, das zwischen den Abdeckungen (90) an jedem Ende des Hohlkörpers (100) eingeschlossen ist.

**5.** Hohlkörper (100) nach Anspruch 4, wobei das Inertgas Helium umfasst.

**6.** Hohlkörper (100) nach Option b) von Anspruch 1, ferner aufweisend ein Schild an jedem der beiden Infrarot-Reflektoren.

**7.** Hohlkörper (100) nach Anspruch 6, wobei jeder der Schilde ein Material beinhaltet, welches dasselbe ist wie das Auskleidungsmaterial.

**8.** Hohlkörper (100) nach Anspruch 6, wobei jeder der Schilde eine reflektive Scheibe beinhaltet mit einer mit der Mittenachse des Hohlkörpers (100) ausgerichteten Mitte aufweist.

**9.** Hohlkörper (100) nach Option c) von Anspruch 1, wobei die Membran ein Material auf Kohlenstoff-Basis beinhaltet.

**10.** Hohlkörper (100) nach Option a) oder b) von Anspruch 1, wobei das Auskleidungsmaterial ein Material mit hohem Z, wie Blei, beinhaltet.

**11.** Hohlkörper (100) nach Anspruch 1, wobei die Abdeckung (90) an jedem Endbereich ein Material auf Kohlenstoff-Basis beinhaltet.

**12.** Hohlkörper (100) nach Anspruch 9 oder 11, wobei das Material auf Kohlenstoff-Basis wenigstens eines von Polyimid, Graphen, Graphen-verstärktes Polymer, Diamant-ähnlichem Kohlenstoff oder Diamant beinhaltet.

**Revendications**

**1.** Corps noir (100) pour une centrale à fusion par confinement inertiel à attaque indirecte dans laquelle le corps noir (100) entoure une capsule (40) à un emplacement central contenant du combustible de fusion, le corps noir (100) comprenant :

une surface extérieure ayant deux régions d'extrémité et une région centrale entre les deux régions d'extrémité, la région centrale ayant une configuration cylindrique généralement symétrique d'un premier diamètre autour d'un axe central, chacune des régions d'extrémité s'amincissant du premier diamètre à un second diamètre plus petit à des extrémités du corps noir (100) ;
un trou d'entrée de faisceau laser à chacune des régions d'extrémité du corps noir (100);
un couvercle (90) à chacune des régions d'extrémité du corps noir (100) pour enfermer un gaz dans celui-ci ; et
un intérieur creux,
**caractérisé en ce que**
l'intérieur creux est défini par une paroi intérieure (80) ayant une forme ovale par rapport à l'axe central ;
et l'une des caractéristiques suivantes s'applique :

a) le corps noir comprenant en outre un matériau de revêtement disposé sur la paroi intérieure (80), dans lequel le matériau de revêtement comprend un matériau d'une densité supérieure à la paroi intérieure (80) ; ou
b) le corps noir (100) comprenant en outre un matériau de revêtement disposé sur la paroi intérieure (80) et deux réflecteurs infrarouges, l'un disposé entre le couvercle (90) à une extrémité du corps noir (100) et un point milieu le long de l'axe central du corps noir (100) et l'autre disposé entre le couvercle (90) à une extrémité opposée du corps noir (100) et le point milieu le long de l'axe central du corps noir (100) ; ou
c) le corps noir (100) comprenant en outre une membrane disposée perpendiculaire à l'axe central pour supporter la capsule (40) le long de l'axe central près d'un point central le long de l'axe central.

**2.** Corps noir (100) selon la revendication 1, dans lequel chacune des régions d'extrémité comprend une saillie en forme de cône tronqué s'étendant entre la région centrale et les trous d'entrée de faisceau laser.

**3.** Corps noir (100) selon la revendication 2, dans lequel le couvercle (90) au-dessus de chacun des trous d'entrée de laser est sensiblement transparent.

**4.** Corps noir (100) selon la revendication 2, dans lequel l'intérieur creux contient un gaz inerte confiné entre le couvercle (90) à chaque extrémité du corps noir (100).

**5.** Corps noir (100) selon la revendication 4, dans lequel le gaz inerte comprend de l'hélium.

**6.** Corps noir (100) selon l'option b) de la revendication 1, comprenant en outre un écran disposé sur chacun des deux réflecteurs infrarouges.

**7.** Corps noir selon la revendication 6, dans lequel chacun des écrans comprend un matériau qui est le même que le matériau de revêtement.

**8.** Corps noir (100) selon la revendication 6, dans lequel chacun des écrans comprend un disque réflecteur ayant un centre aligné sur l'axe central du corps noir (100).

**9.** Corps noir (100) selon l'option c) de la revendication 1, dans lequel la membrane comprend un matériau à base de carbone.

**10.** Corps noir (100) selon l'option a) ou b) de la revendication 1, dans lequel le matériau de revêtement comprend un matériau à Z élevé tel que le plomb.

11. Corps noir (100) selon la revendication 1, dans lequel le couvercle (90) à chacune des régions d'extrémité comprend un matériau à base de carbone.

12. Corps noir (100) selon la revendication 9 ou 11, dans lequel le matériau à base de carbone comprend au moins l'un parmi du polyimide, du graphène, du polymère renforcé au graphène, du carbone sous forme de diamant ou du diamant.

**FIG. 1**
**Prior Art**

Cryo-cooling
Ring

Hohlraum

Au wall
Au-B layer
He-H filled
Be or CH capsule
Lined LEH

Laser Entrance
Hole (LEH)

Fill tube

**FIG. 2**

Hohlraum
568 K
458 K
348 K
234 K
129 K
19 K

Temperature K

IR shield
He
Capsule
He
He
IR shield 19K
He
568K

8000K
Xe gas

He
convection
currents

Thermal
gradient

~2200K
LEH window
(310)

8000K Xe gas

**FIG. 3**

**FIG. 4**

40

110

**FIG. 5**

FIG. 6

FIG. 7

**Capsule**

Fabricate CVD diamond ablator → Laser-drill fill-hole → Create inner foam layer → Fill foam with DT → Plug hole

**Hohlraum**

Injection – mold/plate Pb hohlraum parts → Attach polyimide membranes
- Pre-formed capsule support
- IR shield
- LEH window

Assemble hohlraum parts → Place capsule into hohlaum → Assemble hohlraum halves

*FIG. 8*

## REFERENCES CITED IN THE DESCRIPTION

**Patent documents cited in the description**

- US 61411390 B
- US 61425198 B
- US 2011059791 W

**Non-patent literature cited in the description**

- **VANDENBOOMGARDE et al.** Prolate-Spheroid (''Rugby-Shaped'') Hohlraum for Inertial Confinement Fusion. *Physical Review Letters,* vol. 99 (6
- **S.W. HAAN et al.** Design and simulations of indirect drive ignition targets for NIF. *Nucl. Fusion,* vol. 44
- **J.D. LINDL et al.** *Phys. Plasmas,* 2004, vol. 11 (2), 339
- **J.D. LINDL.** Inertial Confinement Fusion. Springer-Verlag, 1998
- **D.S. CLARK ; S.W. HAAN ; J.D. SALMONSON.** *Phys. Plasmas,* 2008, vol. 15, 056305
- **M.C. HERRMANN ; M. TABAK ; J.D. LINDL.** *Nucl. Fusion,* 2001, vol. 41, 99
- **L.J. SUTER ; S. HAAN ; M. HERRMANN.** *Bull. Am. Phys. Soc.,* 2005, vol. 50 (8), 187
- **M. DUNNE et al.** *Timely delivery of Laser Inertial Fusion Energy (LIFE)*
- **T. ANKLAM ; A. SIMON ; W. MEIER ; S. POWERS.** *The Case for Early Commercialization of Fusion Energy*
- **R. MILES et al.** *Challenges Surrounding the Injection and Arrival of Targets at LIFE Target Chamber Center*
- **F. PHILIPPE et al.** *Phys. Rev. Lett.,* 2010, vol. 104, 035004
- **H.F. ROBEY et al.** *Phys. Plasmas,* 2010, vol. 17, 056313
- **P. AMENDT ; T.J. MURPHY ; S.P. HATCHETT.** *Phys. Plasmas,* 1996, vol. 3, 4166
- **P. AMENDT ; S.G. GLENDINNING ; B. HAMMEL ; O.L. LANDEN ; L.J. SUTER.** *Phys. Rev. Lett.,* 1996, vol. 77, 3815
- **D.A. CALLAHAN ; P. AMENDT ; E.L. DEWALD et al.** *Phys. Plasmas,* 2006, vol. 13, 056307